# EUROPÄISCHE PATENTANMELDUNG

(11) **EP 1 777 389 A2**
(43) Veröffentlichungstag der Anmeldung: **25.04.2007**
(21) Anmeldenummer: 06022092.8
(22) Anmeldetag: 20.10.2006
(51) Int. Cl.: F02C 1/02

(54) **Verwendung eines Turbokompressors zur Gewinnung von Energie aus einem unter Druck stehenden Gas**

(30) Priorität: 21.10.2005 DE 102005050573
(71) Anmelder: Eco Naturgas Handels GmbH, 12167 Berlin (DE)
(72) Erfinder: Tentscher, Wolfgang Dr., 12167 Berlin (DE)
(74) Vertreter: Schwabe - Sandmair - Marx

(57) **Zusammenfassung**

Anlage zur Gewinnung von Energie aus einem unter Druck stehenden Gas, aufweisend einen Druckbehälter oder einen Anschluss an ein Druckleitungssystem, aus dem das Gas mit einem hohen Druck ausströmt, eine Turbine (Tₙ), die das ausströmende Gas entspannt und dadurch angetrieben wird, einen Kompressor (Kₙ) sowie ein E-Motor/Generator (Gₙ), die beide mit der Turbine (Tₙ) eine gemeinsame Welle haben und über diese Welle angetrieben werden, eine nach der Turbine (Tₙ) angeordnete Vorrichtung zur Umwandlung der Energie des entspannten Gases, wobei ein Turbokompressor, wie z.B. aus Automobilen bekannt, Kompressor (Kₙ) und Turbine (Tₙ) bildet und es sich bei dem unter Druck stehenden Gas um ein brennbares Nutzgas handelt.

## Beschreibung

Die Erfindung beschäftigt sich mit den Einsatzmöglichkeiten eines aus dem Automobilbau bekannten Turbokompressors in Anlagen, bei denen ein unter Druck stehendes Gas, bevorzugt ein brennbares Nutzgas, entspannt wird. Das sich entspannende Gas wird dabei durch die Turbinenseite des Turbokompressors geführt, treibt dadurch die Turbine und über die gemeinsame Welle zusätzlich einen Kompressor an. Der Kompressor seinerseits wird genutzt, um das Druckniveau eines zu verdichtenden Gases zu heben. Das entspannte Gas, soweit es sich um das brennbare Nutzgas handelt, kann im entspannten Zustand z.B. einem Motor als Treibstoff dienen, der Motor seinerseits kann einen Generator zur Stromgewinnung antreiben.

Die Entspannung von Erdgas in Turbinen mit gleichzeitiger Stromerzeugung ist bekannt. Das Erdgas steht dabei unter einem Druck von über 10 bar, der Gasstrom liegt in der Regel oberhalb von 7.000 m³/h. Das Ergas ist kalt (etwa zwischen 0°C und 40°C). Die Turbinen weisen Drehzahlen von einigen tausend Umdrehungen pro Minute auf. Solche Drehzahlen können technisch in einfachen Getrieben oder auch getriebelos auf Generatoren zur Stromerzeugung übertragen werden. In Gasvorwärmern muss das Erdgas vor der einstufigen Entspannung auf ca. 100°C erhitzt werden, um die durch den Joul-Thomsen-Effekt resultierende Abkühlung zu kompensieren. Als Folge der Abkühlung kann es zu Kondensatabscheidungen, zur Hybridbildung und zu Vereisungen kommen. Bei einer Entspannung von z.B. 50.000 m³/h Erdgas von 50 bar auf 1 bar sind ca. 1 MWₜₕ installierte Feuerleistung notwendig. Dies verursacht erhebliche Betriebskosten, Diese Wärme kann durch Verdichter-/Kompressorräder bereitgestellt werden, indem ein zur Einspeisung in das Gasnetz bestimmtes Gas oder einfach Luft zur Be- und Entlüftung komprimiert wird.

Um Gasmengen mit einem Durchsatz von unter 7.000 m³/h bei Umgebungstemperatur auf einen Einlassdruck von weniger als 20 bar, bevorzugt 5 bar bis 20 bar, zu entspannen, sind diese Turbinen nicht geeignet Um hier die Drücke bzw. Druckunterschiede für z.B. die Erzeugung von Strom nutzen zu können, müssen spezielle Strömungsmaschinen mit Spezialanfertigungen sowohl bei den Turbinenrädern als auch bei den Verdichter-/Kompressorrädern verwendet werden. Nur so können die erforderlichen Wirkungsgrade zum wirtschaftlichen Einsatz derartiger Anlagen erreicht werden, die aufgrund ihrer speziellen Auslegung und geringen Stückzahl einen großen Kostenfaktor darstellen,

Es ist Aufgabe der Erfindung eine Anlage und ein Verfahren bereitzustellen, um kostengünstig Gasströme vorzugsweise unter Umgebungstemperatur mit niederem Volumendurchsatz und relativ niederem Druck zur Energrieerzeugung nutzen zu können.

Die Lösung liegt in dem Einsatz von Turbokompressoren/Turboladern, die für diese Aufgabe die geeigneten Strömungsmaschinen sind. Der Einsatz von Turbokompressoren ist in Verkehrsmitteln mit motorischem Antrieb (Diesel- und Ottomotor) zu Lande und zu Wasser weit verbreitet.

Die Erfindung betrifft ein Verfahren zur Gewinnung von Energie aus einem unter Druck stehenden Gas. Bei dem Gas handelt es sich um ein brennbares Nutzgas, d,h, es kann jedes zur Verbrennung nutzbare : Gas und jede entsprechende Gasmischung genutzt werden. Bevorzugt handelt es sich um Erdgas, aufbereitetes Biogas, Wasserstoff oder Gemische aus bzw. mit diesen Gasen.

Das Wort "oder" wird in der Anmeldung, d.h. in den Ansprüchen und der Beschreibung, stets im üblichen logischen Sinne von "und/oder" verstanden, soweit sich aus dem jeweiligen Zusammenhang nicht unmissverständlich eine einschränkende Bedeutung im Sinne von "und" oder "entweder oder" ergibt.

Das Gas kommt entweder aus einem Druckbehälter oder aus einer Druckleitung, z.B. Erdgasleitung. Es steht dort beispielsweise in Erdgasverteilemetzen unter einem Druck von maximal 20 bar und wird beim Austritt aus Behälter oder Leitung entspannt. Dies kann über Druckregler herkömmlicher Art geschehen, in denen Energie vernichtet wird, oder erfindungsgemäß durch die Leitung des Gasstromes durch die Turbinenseite eines Turbokompressors. Dabei wird die Entspannungsenergie des Gases in der Turbine in Leistung im Bereich von 2 kW bis 100 kW, beispielsweise Rotationsenergie umgewandelt, die sowohl die Turbine, als auch den auf der gemeinsamen Welle sitzende Kompressor und bevorzugt einen E-Motor antreibt. Das Gas kann auch aus einer unter Druck stehenden Flüssigkeit austreten, in der es physikalisch oder chemisch gelöst war. Die unter Druck stehende Flüssigkeit kann gleichzeitig über eine Wasserturbine entspannt werden und die Gasturbine im Turbokompressor ersetzen. Ebenso kann das Kompressorrad durch eine Wasserpumpe ersetzt werde.

Nach der Entspannung in der Turbine kann das brennbare Nutzgas einem Verbrennungsprozess zugeführt werden, z.B. einem Verbrennungsmotor, der mit einem Generator zur Stromerzeugung mittels einer Kupplung, das heißt indirekt, oder bevorzugt kupplungsfrei, das heißt direkt, gekoppelt ist.

In Anlagen zur Erzeugung von Biogas, wie sie mehr und mehr auf Bauernhöfen oder in Gemeinden mit ausgeprägter Landwirtschaft zu finden sind, kann der Turbokompressor z.B. das unter Umgebungstemperatur (ca. 5°C bis 30°C) aufbereitete, unter Druck von ca. 9 bar stehende Biogas auf einen Druck von ca. 80 mbar entspannen und einem Verbrennungsmotor zuführen. Das Biogas kühlt sich dabei stark ab. Der mitdrehende Kompressor wird in diesem Fall dazu genutzt, das aus dem Bioreaktor kommende Rohgas mit niederem Druck vor dem Eintritt in eine Aufbereitungsanlage mit kontinuierlichen oder semikontinuierlichen, trockenen oder nassen Verfahren, z.B. eine Druckgaswäsche, zu komprimieren. Die freiwerdende Wärme wird zur Erwärmung des in der Turbine abgekühlten Gases eingesetzt. All diese Verfahren arbeiten mit erhöhtem Gasdruck (ca. 2 bar bis 20 bar), um Gase wie Kohlendioxid oder Schwefelwasserstoffe zu absorbieren oder zu adsorbieren. Der Teil der Druckanhebung den der Kompressor liefert, optimal sind wenigstens 50%, muss jetzt nicht mehr von der Anlage selbst geleistet werden. Die durch den Einsatz von Fremdenergie notwendige Anhebung des Druckes wird um den Teil, der durch den Kompressor geleistet wird, verringert, und entsprechend weniger Energie muss in der Druckgaswäsche zur Erreichung des Betriebsdruckes eingesetzt werden, bzw. die Kapazität der Anlage kann bei gleichem Energieeinsatz entsprechend erhöht werden. Statt der einen Turbine und des einen Kompressors, die eine gemeinsame Welle aufweisen und daher auch als Turbokompressoren bezeichnet werden, können auch mehrere Turbokompressoren hintereinander angeordnet, das heißt, in Reihe oder Serie geschalten sein. Jede der Turbinen leistet dann einen Beitrag zur stufenweise Entspannung des Nutzgases = Biogases, jeder Kompressor einen Beitrag zur Verdichtung des Ausgangsgases, das ebenfalls das Biogas sein kann, das in einem Druckgaswäscher, der zwischen dem Ausgang des letzten Kompressors und dem Eingang der ersten Turbine, die sich eine Welle teilen können, angeordnet ist, aufbereitet wird. Wird nicht die gesamte durch die Turbine/Turbinen erzeugt Energie zur Verdichtung des Rohgases benötigt, kann diese überschüssige Energie durch einen, bevorzugt ebenfalls mit der gemeinsamen Welle von Turbine und Kompressor verbundenen E-Motor/Generator antreiben, der zur Stromerzeugung genutzt wird. Es kann aber beim Einsatz mehrerer Turbokompressoren auch durch einen oder mehrere Kompressoren eine von der Art des Biogases verschiedenes Gas oder eine Flüssigkeit verdichtet oder gefördert werden. Zum Beispiel könnte verdichtete Luft in ein Haus, einen Stall/Raum oder Silo/Bioreaktor geleitet werden oder Wasser in ein Gewächshaus, einen Stall, einen Bioreaktor oder einen Vorratsbehälter gefördert werden.

Bei der Aufbereitungsanlage kann es sich neben einer Druckgaswäsche auch um eine reine Mischanlage oder jede andere Anlage handeln, die dazu geeignet ist, ein brennbares Nutzgas herzustellen oder dessen Brennleistung zu verändern.

Die Erfindung kann ebenfalls Anwendungen in einem Erdgasfemtransport- oder Erdgasverteilemetz finden. Dabei wird das bei Umgebungstemperatur unter einem Druck von 5 bar bis 100 bar stehende Erdgas nicht direkt zum Endverbraucher geführt, sondern vor der Einspeisung in ein Verteilnetz, ein Ortsnetz, ein Ortsteilnetz oder ein größeres Gebäude durch die Turbine wenigstens eines Turbokompressors gleitet und auf einen niedrigeren Druck, z.B. 100 mbar entspannt. Die Abkühlung des Gases bei der Entspannung (ca. 0,5 K/bar) wird nicht mehr durch Verbrennung von Erdgas oder bei zum Beispiel Blockheizkraftwerken durch Verbrennung anderer fossiler Brennstoffe, deren Abgase CO₂ belastet sind, ausgeglichen, sondern durch Kompressionswärme, die am Kompressorrad entsteht. Dadurch entfällt die Notwendigkeit eines Heizkessels. Das entspannte Gas wird dann dem Endverbraucher, wie Heizung, Klimaanlage, Herd, Boiler, Verstromungsaggregat zugeführt. Gleichzeitig wird der mitdrehende Kompressor benutzt, um z.B. Luft in oder aus einem Gebäude zu befördern oder zur Drucklufterzeugung und mit der Kompressorwärme das entspannte Gas zu erwärmen.

Dabei kann an jeder der Schnittstellen ein oder mehrere Turbokompressoren zum Einsatz kommen, so dass bei dem Weg des Erdgases von der Erdgasfernnetzleitung bis zum Verbraucher an allen Stellen, an denen eine Reduzierung des Netzdruckes stattfindet, Rotationsenergie erzeugt und genutzt werden kann. Je kleiner der Unterschied zwischen dem Ausgangsdruck und dem reduzierten Druck an den einzelnen Schnittstellen wird, desto weniger Rotationsenergie kann gewonnen werden, desto weniger Energie ist aber auch notwendig, um das expandierte Gas zu erwärmen. Beispielsweise kann in einer letzten Stufe der Turbokompressor direkt an der Gasabgabestelle innerhalb eines Gebäudes angeordnet sein, wo Gas mit einem Druck P 1 (z.B. 5 bar) aus einem lokalen Ortsnetz ankommt und auf einem Druck P2 (z.B. 100 mbar) reduziert wird, mit denen das Gas dann an die Endabnehmer weitergeleitet wird. Geht man von dem vorgenannten Abkühlwert von ca. 0,5 K/bar aus, so wird das Gas bei der Entspannung um ca. 10 K abgekühlt. Die von der Turbine erzeugte Rotationsenergie kann dann genutzt werden, um beispielsweise über den Kompressor einen Luftstrom zu erzeugen, mit dem das Gebäude be- oder entlüftet wird. Es ist aber auch denkbar mit der Rotationsenergie Druckluft zu erzeugen, die beispielsweise in einer Produktion zum Öffnen und Schließen von Vorrichtungen benötigt wird.

Auch in der Industrie, z.B. der Petrochemie, kann die Erfindung eingesetzt werden, wobei hier der mitlaufende Kompressor genutzt wird, um jedes beliebige Gas, dessen Druckniveau angehoben werden soll, zu komprimieren oder zumindest vorzukomprimieren.

Ebenso ist die Verwendung der Anlage in einem Automobil, das Gas als Treibstoff benutzt sinnvoll, da das Gas vor der Verbrennung im Verbrennungsmotor entspannt wird und die über den Turbokompressor gewonnene Kompressorleistung zum Aufbau eines Ladedrucks genutzt werden kann: Unter Ladedruck ist der Druck zu verstehen, auf den ein sauerstoffhaltiges Gasgemisch, bevorzugt Umgebungsluft, verdichtet wird, bevor es dem Verbrennungsprozess zugeführt wird und dort zusammen mit beispielsweise einem Zündgas verbrannt wird. Bei Motoren mit geeigneter Motoraufladung kann der Ladedruck geregelt und dadurch das Drehmoment bzw. die Leistung gesteigert werden.

In allen Fällen ist es möglich und meist auch sinnvoll, abhängig von der benötigten Kompressorleistung einen E-Motor/Generator direkt mit der gemeinsamen Welle von Turbine und Kompressor zu koppeln. Als Generator dient der E-Motor zur Stromerzeugung. Dieser E-Motor/Generator wird bevorzugt zwischen Turbinen- und Kompressorlaufrad auf der gleichen Welle angebracht. Bevorzugt kommen hierbei spezielle schnell laufende E-Motoren/Generatoren mit Permanentmagnet (Synchronmotor) oder Asynchronmotoren mit Käfigläufern zum Einsatz. Turbinendrehzahlen von 6.000 bis 120.000 U/min sind in solchen E-Motoren/Generatoren direkt nutzbar. Die Drehzahl der Turbokompressoren sinkt mit steigendem Durchsatz. Bei Drehzahlen über 50.000 U/min ist die Lagerung auf Magnetlagern sinnvoll, um Reibungsverluste zu vermeiden. Durch diese zusätzliche Kopplung von E-Motor/Generator mit der Turbokompressorwelle kann einerseits ein wesentlicher Teil der Energie des unter Druck stehenden Gases konvertiert werden: in Antriebs- bzw. Rotationsenergie für den Kompressor, Antriebsenergie für den mit der Welle gekoppelten Generator und über den Verbrennungsprozess in thermische Energie. Dabei gilt, dass je weniger Kompressorleistung benötigt wird, desto mehr Rotationsenergie der Turbokompressorwelle zur Stromerzeugung genutzt werden kann et vice versa. Andererseits kann bei zusätzlichem Drehenexgiebedarf der E-Motor Strom für den Antrieb des Kompressorrads bereitstellen. Ein solcher Strombedarf kann auftreten, wenn die Dichten, die cp- oder Kappawerte der Gase stark voneinander abweichen und der Zieldruck ohne den zusätzlichen Antrieb nicht erreicht werden kann.

Es kann auch sinnvoll sein, auf einer ersten Welle zwei Turbinen- und auf einer zweiten Welle zwei Verdichter-/Kompressorräder anzubringen, zwischen denen sich jeweils der E-Motor/Generator befindet. Mit einer solchen Aufteilung oder Anordnung können Betriebszustände weiter optimiert werden. Diese spezielle Anordnung der Turbinen bzw. Kompressoren ist nicht Bestandteil der Erfindung, die Anmelderin behält sich aber ausdrücklich das Recht vor, eine oder mehrere auf diese Ausführungsart gerichtete Teilungsanmeldungen zu einem späteren Zeitpunkt einzureichen.

Die Erfindung umfasst auch die Anlage zur Umsetzung der beschriebenen Verfahren. Die Anlage weist einen Druckbehälter oder den Anschluss an ein Druckleitungssystem auf, die das Gas mit einem hohen Druck, in der Regel über 20 bar, abgeben. Sie weist weiterhin eine Turbine auf, durch die das unter Druck stehende Gas geleitet und dabei entspannt wird. Die Turbine sitzt auf einer gemeinsamen Welle mit einem Kompressor, so dass alle gemeinsam drehen. Die am Einlass der Turbine anfallende Entspannungskälte kann mit Kompressionswärme in Wärmetauschern, die den Einlass der Turbine und den Einlass des Kompressors thermotechnisch verbinden, ausgeglichen werden. Das entspannte Gas wird nach der Turbine einer Vorrichtung zur Umwandlung seiner Energie, z.B. einem Verbrennungsmotor, zugeleitet. Turbine und Kompressor werden dabei von einem Turbolader/Turbokompressor gebildet, wie er aus z.B. Automobilen bekannt ist.

Mit umfasst ist aber auch eine Anlage, bei der ein Gas oder Nutzgas zu anderen Zwecken als der Energieumwandlung entspannt wird, z.B. zur Nutzung in einer chemischen Reaktion, zum Abfüllen, zur Verdünnung oder zum Mischen mit anderen Komponenten. Der mitlaufende Kompressor kann auch in diesem Anwendungsfall sinnvoll zur Verdichtung oder Beschleunigung eines anderen Gasstromes genutzt werden. Auch hier kann durch Kopplung der Turbokompressorwelle mit einem Generator Strom erzeugt werden, der zusätzlich zur wirtschaftlichen Effizienz der Anlage beiträgt.

Bei großen Druckunterschieden kann es Sinn machen, mehrere Turbokompressoren in Reihe zu schalten. Dadurch kann gerade bei höheren Unterschieden zwischen dem Druck des Ausgangsgases und dem Druck des zur Weiterverwendung auf einen vorgegebenen Enddruck entspannten Gases oder Nutzgases noch besser genutzt werden. So kann z.B. mittels der dann ebenfalls hintereinander angeordneten und in Strömrichtung des Gases mit zunehmender Geschwindigkeit bzw. zunehmender Kraft drehenden Kompressoren ein Gas in mehreren Stufen komprimiert werden oder die Ausbeute an Strom durch das Koppeln mehrerer oder aller Turbokompressorwellen mit Generatoren maximiert werden. Die Erwärmung des entspannten Gases findet in mehreren Stufen mittels Wärmetauschern mit der Kompressionswärme statt.

Im Falle großer Druckunterschiede zwischen Ausgangsgas und entspanntem Gas, kühlt das Gas bei der Entspannung stark ab, während das mittels des Kompressors verdichtete Gas sich erwärmt. Es kann daher sinnvoll sein, vor oder hinter jedem oder jedem zweiten Turbokompressor je einen Wärmetauscher vorzusehen, der das sich entspannende Gas erwärmt und gleichzeitig das komprimierte Gas kühlt. Die Wärmetauscher können aber je nach Anwendung auch in anderen Intervallen angeordnet sein. Solche Wärmetauscher können direkt oder indirekte Wärmetauscher sein, Gas-Gas-Wärmetauscher, Gas-Flüssig-Wärmetauscher oder jede andere Art von geeigneten Wärmetauschern. Die Gas-Flüssig-Wärmetauscher können z.B. im Gehäuse des Turbokompressors gebildet sein, wo bei der motorischen Anwendung der Turbokompressoren Motorenöl oder Ladeluftkühlung, die in der erfindungsgemäßen Anwendung fehlen, wirken. Sinnvoll kann eine Kombination aus Gas-Gas-Wärmetauschern und Gas-Flüssig-Wärmetauschem sein.

In vielen Fällen weisen die drucklosen oder unter Druck stehenden Gase Umgebungstemperatur, d.h. Temperaturen zwischen 5°C und 50°C auf. Es ist aber auch möglich, dass Verbrennungsgase mit höheren Temperaturen oder chemisch aggressive Stoffe unter den Gasen sind. Turbokompressoren aus der Automobilindustrie müssen diesen z. T. aggressiven chemischen und thermischen Bedingungen standhalten.

Auch zur Verwendung in gasbefeuerten Miniblockheizkraftwerken, die als interessante Alternative zu konventionellen Heizungen immer mehr an Beliebtheit gewinnen, ist die erfindungsgemäße Anlage geeignet. Der im Blockheizkraftwerk erzeugte Strom kann im Haus verwendet oder ins Netz des Versorgers eingespeist werden. Auch in diesem Fall wird die Effizienz der Gesamtanlage erhöht, indem die Entspannungsenergie des Gases über den Turbokompressor genutzt wird, um zusätzlichen Strom zu erzeugen und über den Kompressor z.B. eine Luftströmung in das Gebäude oder aus diesem heraus erzeugt wird.

Schließlich umfasst die Erfindung auch die Nutzung eines Turbokompressors in einer Anlage zur Gewinnung von Energie aus einem unter Druck stehenden brennbaren Nutzgas, insbesondere ein aufbereitetes Biogas. Der Turbokompressor ist zwischen einer Gasaufbereitungseinrichtung und einer Energieumwandlungseinrichtung im Gasstrom oder auch einem Gasnetz, in das es eingespeist werden soll, angeordnet. Dabei muss das aus der Gasaufbereitungseinrichtung kommende Gas, das unter einem vorgegebenen Druck, z.B. 9 bar, ausströmt, vor der Nutzung in der Energieumwandlungseinrichtung entspannt werden, z.B. auf 100 mbar. Die bei der Entspannung des Gases freigesetzte Energie wird in der Turbine des Turbokompressors in Rotationsenergie umgewandelt und treibt über eine gemeinsame Welle einen Kompressor an. Dieser Kompressor kann nun zur Verdichtung oder Beschleunigung eines Gasstromes, z.B. dem Gasstrom in die Gasaufbereitungseinrichtung, genutzt werden. Die Turbokompressorwelle kann, zusätzlich zum Antrieb des Kompressors, mit einem Generator zur Stromerzeugung gekoppelt sein. Der Turbokompressor kann an jeder Stelle innerhalb der Aufbereitungsanlage eingesetzt werden, bei der Gas entspannt wird. Entspannungskälte kann vorzugsweise zur Kühlung von Prozesswasser eingesetzt werden, welches bei niederen Temperaturen Gase besser absorbiert. Durch den Einsatz der Turbokompressoren an jeder Gasentspannungsstelle kann die eingesetzte Kompressorarbeit optimal zurückgewonnen und der Energieaufwand der Gasaufbereitungsanlage minimiert werden. In Aufbereitungsanlagen, die mit Flüssigkeiten arbeiten, kann entweder das Turbinenrad oder das Verdichter-/Kompressorrad oder beide entweder auf Gase oder Flüssigkeiten ausgelegt sein. So kann das Turbinenrad beispielsweise Gas entspannen, während das Verdichter-/Kompressorrad Flüssigkeit fördert oder umgekehrt.

In den folgenden Figuren und Beschreibungen wird eine bevorzugte Ausführung der erfindungsgemäßen Vorrichtung näher beschrieben und erläutert. An den Ausführungsbeispielen offenbar werdende Merkmale bilden je einzeln und in jeder Merkmalskombination die Gegenstände der Ansprüche und die vorstehend beschriebenen Ausgestaltungen vorteilhaft weiter.
- Figur 1: Prinzipskizze einer erfindungsgemäßen Anlage mit einem Turbokompressor.
- Figur 2: Anlage mit mehreren in Reihe geschalteten Turbokompressoren mit indirekten Wärmetauschern
- Figur 3: Anlage mit mehreren in Reihe geschalteten Turbokompressoren mit Gas-Gas-Wärmetauschern
- Figur 4: Einsatz der Anlage nach Figur 2 in einer Biogasanlage
- Figur 5: mehrere Turbinen oder Kompressoren auf einer Welle

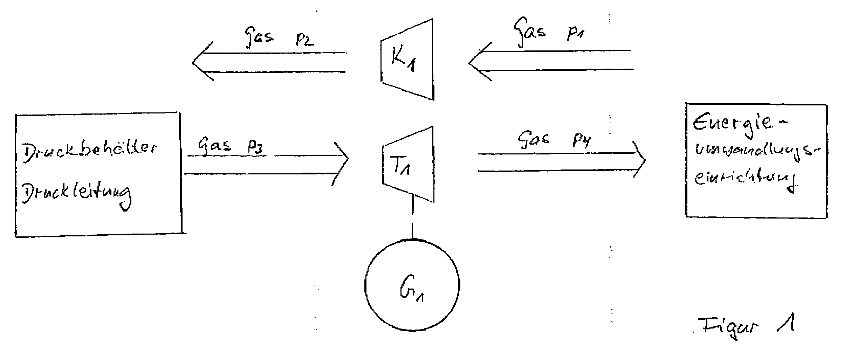

In Figur 1 ist eine erfindungsgemäße Anlage mit einem Turbokompressor, der aus einer Turbine T1 und einem Kompressor K1 besteht, die eine gemeinsame nicht gezeigte Welle haben, dargestellt. Aus einem Druckbehälter bzw. dem Anschluss an eine Druckleitung strömt ein Gas mit dem Druck p3 aus. Dieses Gas ist zur Verwendung in einer Energieumwandlungseinrichtung vorgesehen, der zum Zwecke der Energieumwandlung das Gas mit einem niedrigeren Druck p4 zugeführt werden muss. Das heißt, das Gas muss auf seinem Weg vom Druckbehälter / von der Druckleitung entspannt und auf einen niedrigeren Druck gebracht werden. Erfindungsgemäß durchströmt das Gas bei der Entspannung eine Turbine T1. Dabei versetzt das durch die Entspannung beschleunigte Gas die Turbine T1 in eine Rotation.

Die Turbine T1 sitzt auf einer gemeinsamen Welle mit einem Kompressor K1. Dieser wird mit der Turbine T1 mitgedreht und kann daher genutzt werden, um ein zweites Gas von einem Druck p1 auf einen Druck p2 zu verdichten. Dabei wird der Kompressor K1 allein durch die auf die Turbine T1 wirkende Kraft des entspannenden Gases angetrieben, d.h. es muss keine zusätzliche Energie eingesetzt werden.

Das durch den Kompressor K1 strömende Gas kann nach dem Kompressor K1 in den Druckbehälter geleitet werden, aus dem nach einer weiteren Druckerhöhung im Behälter das die Turbine T1 antreibende Gas ausströmt. Es kann sich aber auch um einen Gasstrom handeln, der per se nichts mit dem aus dem Druckbehälter / der Druckleitung ausströmenden Gas zu tun hat.

Wenn die Turbine T1 durch das sich entspannende Gas eine Rotationsgeschwindigkeit von wenigstens 6.000 U/min erreicht, kann die Turbinen-Kompressor-Welle, die Turbokompressorwelle direkt mit einem Generator G1, z.B. spezielle schnell laufende Motoren/Generatoren mit Permanentmagnet (Synchronmotor) oder Asynchronmotoren mit Käfigläufern, gekoppelt werden, dessen nutzbarer Drehzahlbereich im Bereich oberhalb von 6.000 U/min liegt. Schnelllaufende Motoren dieser Art sind traditionell in der Feinwerktechnik bekannt, z.B. in Ventilatoren und Festplatten. Turbinendrehzahlen zwischen etwa 6.000 U/min und 120.000 U/min sind in solchen Motoren/Generatoren direkt nutzbar, dass heißt die Motoren/Generatoren werden über die mit der Turbine gemeinsame oder verbundene Welle ohne Zwischenschaltung eines Getriebes direkt angetrieben. So kann die Rotationsenergie der Turbokompressorwelle nutzbringend zur Stromgewinnung verwendet werden. Bei einem Defizit an mechanischer Energie aus dem Turbinenrad, das bei Gasen auftreten kann, die leichter sind als das zu komprimierende Gas oder ungünstigere cp- und Kappawerte aufweisen, kann der E-Motor/Generator das Verdichter-/Kompressorrad zusätzlich antreiben, um den gewünschten Zieldruck nach dem Verdichter-/Kompressorrad zu erreichen.

Bei dem in der Anlage zum Einsatz kommenden Turbokompressor oder Turbolader handelt es sich um einen im Automobilbau gebräuchliches Gerät, das in den Gasstrom integriert wird. In diesem Fall ist der Turbokompressor oder Turbolader bevorzugt zur Unterstützung der Arbeit des vorhandenen Kompressors eingesetzt.

Die Einsatzmöglichkeiten des Turbokompressors/Turboladers in der vorbeschriebenen Art sind in vielfältiger Weise denkbar. So können sie in Erdgasübergabestationen, ausgeführt als Druckreduzierstationen, eingesetzt werden. Mehr und mehr lokale Erdgasortsnetze werden bei Drücken im Verteilernetz zwischen 1 bar und 20 bar betrieben. Das vor dem Gebrauch in einer Heizung, einem Herd, einer Therme etc. zu entspannende Erdgas kann mittels eines mit der Turbokompressorwelle gekoppelten Generators G1 zur Stromerzeugung genutzt werden. Die durch den Betrieb zwangsläufig generierte Kompressorleistung kann zur Bewegung von Luftströmen, zur Bereitstellung von Druckluft, zur Kühlung der Verbrennungsgase oder auch zur Komprimierung von aufbereiteten Gasen, die in das Gasnetz eingespeist werden sollen, und für vieles andere genutzt werden. So ist beispielsweise auch der Einsatz in der Entspannung von flüssigem CO₂ aus Druckgasflaschen möglich, wenn gleichzeitig eine Kompression von CO₂-Gas erfolgt. Die Entspannungskälte kann durch die Kompressionswärme kompensiert werden. Dies wird am besten durch einen nicht gezeigten Wärmetauscher bewirkt, der den Auslass der Turbine, an die Entspannungskälte anliegt mit dem Ausgang des Kompressors, an dem Kompressionswärme anliegt, wärmetechnisch verbindet.

Auch der Einsatz in Fahrzeugen mit Gas als Treibstoff ist sinnvoll zu verwirklichen, So kann der Kompressor K1 notwendigen Ladedruck erzeugen, während die Turbine T1 über einen Generator elektrische Energie erzeugt. In Hybridfahrzeugen mit Gas als Primärenergie kann über den Turbokompressor das Laden der Akkus unterstützt oder ganz bewältigt werden. In Booten könnte der Kompressor K1 z.B. die Arbeit der Lenzpumpen unterstützen, während gleichzeitig Strom für die Batterien oder sonstige Verbraucher erzeugt wird. Nur die Phantasie setzt den Einsatzmöglichkeiten der Erfindung Grenzen.

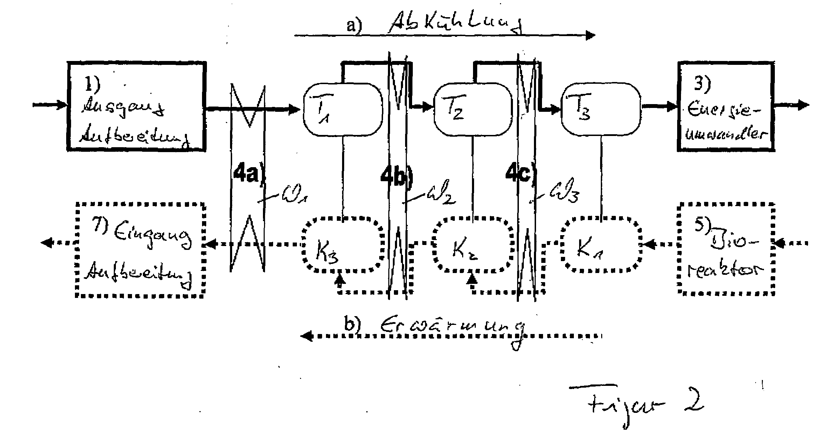

Figur 2 zeigt mehrere in Serie geschaltete Turbokompressoren K1, T3; K2, T2; K3, T1 und dazwischen angeordnete indirekte Wärmetauscher W1, W2, W3. Während sich das Gas beim Komprimieren erwärmt, kühlt es bei der Entspannung wieder ab. Die Anzahl der in Serie geschalteten Turbokompressoren ist abhängig von der Höhe des Druckuhterschiedes des Gases, das bei der Entspannung auf die erste Turbine T1 trifft und dem zu erreichenden Zieldruck, der die Verwendung des Gases z.B. in einem Verbrennungsmotor ermöglicht

Im Gegenzug wird durch die mitdrehenden Kompressoren K1 bis K3 ein anderes Gas von einem niederen Druck, z,B. Umgebungsdruck, stufenweise auf einen höheren Druck komprimiert und einer Verwendung, im Beispiel einer Druckgasreinigungsanlage zugeführt. Dabei wird angestrebt, dass die Kompressoren K1, K2, K3 das Rohgas auf einen Druck heben, der wenigstens 50 % des in der Druckgasreinigungsanlage benötigten Druckes entspricht. Dadurch wird der Energieeinsatz in der Anlage reduziert, die Anlage kann bei gleicher Menge wirtschaftlicher arbeiten oder der Durchsatz der Anlage kann ohne den Einsatz zusätzlicher Energie erhöht werden.

Wird die in der Anlage erzeugte Kompressionswärme nicht vollständig zum Ausgleich der Entspannungskälte, bzw. zum Erwärmen des Biogases vor dem Eintritt in den Energieumwandler benötigt, kann wenigstens ein Wärmetauscher auch zur Erwärmung eines Gases, Gasstromes, einer Flüssigkeit oder eines Flüssigkeitsstromes eines anderen Prozesses genutzt werden. Der Wärmetauscher W1 würden dann zum Beispiel nicht wie in Figur 2 gezeigt Turbine T1 mit Kompressor K3 thermotechnisch verbinden, sondern wäre mit einer nicht gezeigten Leitung oder einem nicht gezeigten Behälter thermotechnisch verbunden und würde seine Wärme an den in der Leitung oder dem Behälter vorhandenen Stoff abgeben..

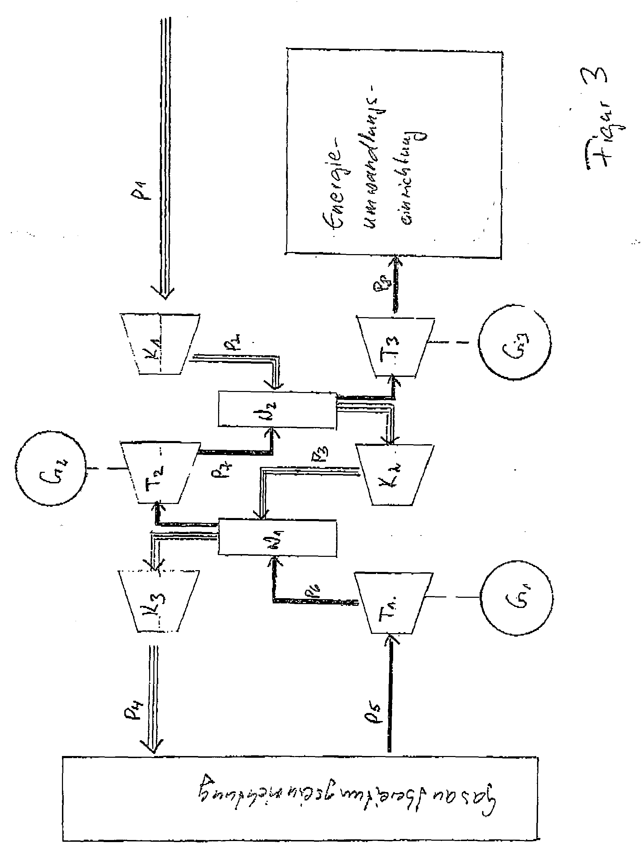

In Figur 3 ist eine Anlage mit mehreren Turbokompressoren K1, T3; K2, T2; K3, T1 und dazwischen angeordneten Gas-Gas-Wärmetausehern W1, W2, zu sehen. Der Weg des Rohgases mit niederem Druck in eine z.B. Gasaufbereitungseinrichtung ist mit den 3-fach Strichen dargestellt, der Gasfluss aus der Einrichtung hin zur z.B. Energieumwandlungseinrichtung wird durch die fetten Pfeile markiert,

Man kann erkennen, dass die im Gasfluss aus der Gasaufbereitungseinrichtung an vorderster Stelle angeordnete Turbine T1 sich eine Welle mit dem, diesmal in Richtung in die Gasaufbereitungseinrichtung gesehen, letzten Kompressor K3 teilt. Entsprechend teilt sich die direkt vor der Energieumwandlungseinrichtung angeordnete letzte Turbine T3 die Welle mit dem ersten vom Gas erreichten Kompressor K1.

Auf seinem Weg wird das Gas durch zwei Wärmetauscher W1, W2 geführt. Dabei wird das durch die Kompression erwärmte Gas durch das gegenläufig strömende, durch die Entspannung abgekühlte Gas gekühlt, bzw. das entspannte Gas durch die Wärme des komprimierten Gases erwärmt.

Wie Figur 3 zeigt, kann mit jeder der Turbinen T1, T2, T3 je ein Generator G1, G2, G3 zur Stromerzeugung gekoppelt sein. Bevorzug sind die Generatoren direkt von der Turbinen-Kompressor-Welle angetrieben, ohne Zwischenschaltung eines Getriebes. Die Generatorleistung ist abhängig von der Drehgeschwindigkeit der Turbinen T1, T2, T3. Wie bereits erwähnt ist die Kopplung der Turbokompressorwelle mit einem Generator nur bei Umdrehungszahlen über 6.000 U/min sinnvoll.

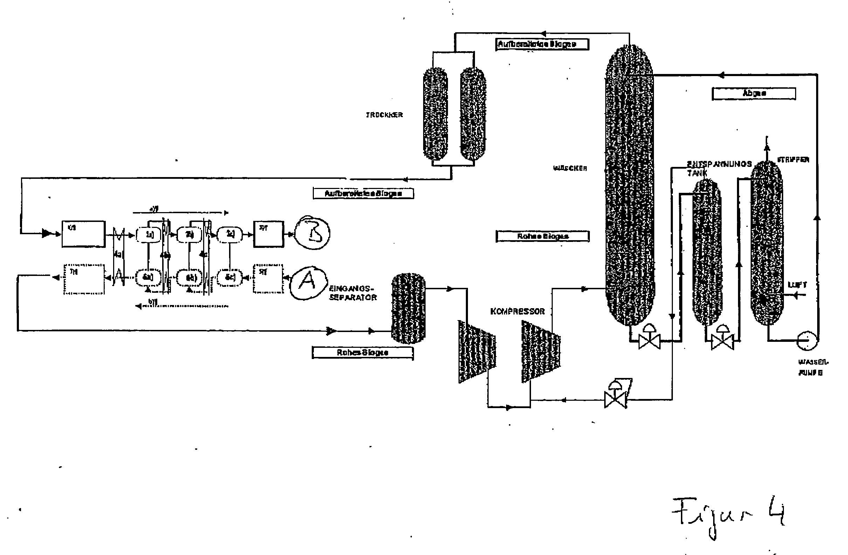

Figur 4 zeigt das Zusammenwirken der Turbokompressoren T1, K3; T2, K2; T3, K1 in der Ausführung der Figur 2 mit einer Biogaswäsche. Das aus einem Bioreaktor A kommende Gas wird vor dem Eintritt in die Biogasanlage vorkomprimiert und von einem niedrigen Ausgangsdruck auf einen Druck von ca. 4,5 bar gehoben. In der Anlage wird der Druck des Gases weiter auf einen Arbeitsdruck von 9 bar erhöht. Nach der Reinigung und anschließenden Trocknung verlässt das jetzt auf Erdgasqualität gereinigte Biogas die Gaswaschanlage mit einem Druck von ca. 9 bar und wird der ersten Turbine zur Entspannung zugeleitet. Nach der ersten Turbine können weitere Turbinen (im Beispiel weitere 2) angeordnet sein, die den nach der ersten Turbine noch existenten Restdruck weiter reduzieren, bis schließlich ein Zieldruckwert erreicht ist, mit dem das Gas einer z.B. Energieumwandlungseinrichtung B zugeführt wird.

Beispielhafte technische Daten eines Turboladers für kaltes Biogas (5° C bis 30°C) (wobei sich die Werte das Verfahren mit kaltem Biogas deutlich von den Werten von Verfahren, die Gase bei Verbrennungsgastemperaturen nutzen, unterscheiden):
- Kapazitätsbereich:: 50 m³/h bis 8000 m3/h
- Leistungsbereich:: 1 kWel bis 400 kWel
- Druckbereich:: 2 bar bis 20 bar
- Serienschaltung:: 2 bis 6 Turbolader in Reihe
- Wärmetauscher:: 2 bis 6 Wärmetauscher in Reihe

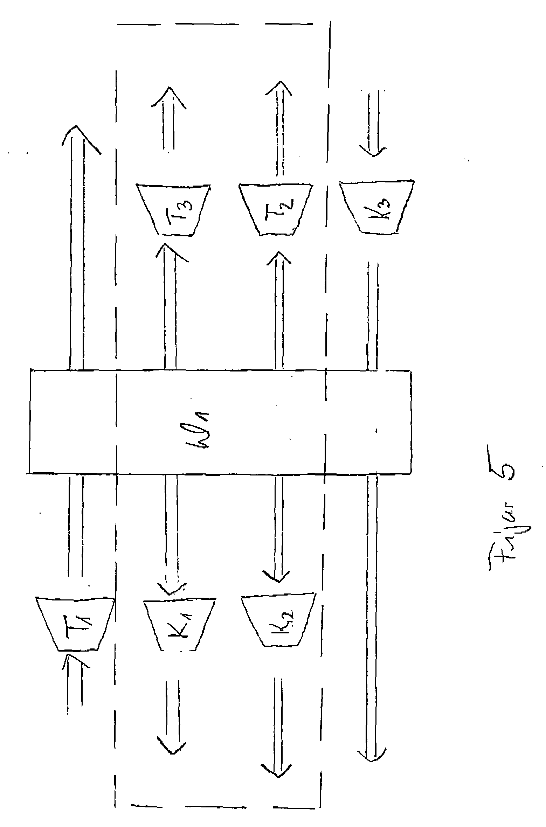

Figur 5 zeigt eine Anordnung von zwei Kompressoren K1, K2 und einer Turbine T1 auf einer ersten Welle und eine Anordnung von zwei Turbinen T2, T3 und einem Kompressor K3 auf einer zweiten Welle, Zwischen der ersten Welle und der zweiten Welle ist ein Wärmetauscher W1 angeordnet. Bei dieser Kombination kann zusätzlich zu dem vorbeschriebenen Entspannen und Komprimieren in einem bekannten Turbokompressor weitere Kompressorleistung an der ersten Welle und weitere Turbinenleistung an der zweiten Welle erzeugt werden. Das heißt, die Turbine T1 treibt die Kompressoren K1 und K2 an, wobei zum Beispiele der Kompressor K1 ein vom Kompressor K3 bereits vorverdichtetes Rohgas einer Biogasanlage, das dann einer Druckgaswäsche zugeführt wird, weiter verdichtet. Das gereinigte Biogas wird in der Turbine T1 und der Turbine T2 entspannt und anschließend beispielsweise einem Verbrennungsprozess zugeführt. Ein Wärmetauscher, der wenigstens den Auslass des Kompressors K3, an dem Komprimerungswärme vorhanden ist, und den Auslass der Turbine T1, an der Entspannungskälte vorhanden ist, miteinander thermotechnisch verbindet, ist zwischen der ersten und der zweiten Welle angeordnet. Der Kompressor K2 wird ebenfalls mit von der Turbine T1 angetrieben und kann unabhängig von der Biogasverdichtung am Kompressor K1 ein weiteres Gas oder eine Flüssigkeit verdichten oder fordern. Dabei kann das weitere Gas oder die Flüssigkeit über den Wärmetauscher W1 vor der Komprimierung oder Förderung erwärmt werden.

Auf der zweiten Welle sitzt eine Turbine T3, die nicht zur Biogasentspannung genutzt werden muss. Durch sie kann ein weiteres Gas geleitet und entspannt werden. In diesem Fall treibt sie gemeinsam mit der Turbine T2 den Kompressor K3 an. Es müssen nicht immer alle in Figur 5 gezeigten Turbinen T1 , T2, T3 und Kompressoren K1, K2, K3 vorhanden sein. Lässt man zum Beispiele auf der ersten Welle die Turbine T1 weg und auf der zweiten Welle den Kompressor K3, so kommt man zu der durch die mit gestrichelten Linien umrandete, nicht beanspruchten Anordnung, in der sich zwei Kompressoren K1 und K2 auf der ersten Welle befinden und zwei Turbinen T2 und T3 auf der zweiten Welle. Der Wärmetauscher W1 verbindet in diesem Fall die Auslässe der Turbinen T2, T3 mit den Ausgängen der Kompressoren K1, K2. Solch eine Anordnung kann beispielsweise vorteilhaft sein, wenn bei der Komprimierung eines ersten Gasstromes an dem Kompressor K1 zuwenig Komprimierungswärme anfällt um die Entspannungskälte in einem ersten Prozess, zum Beispiel an der Turbine T2 auszugleichen, während bei der Komprimierung eines zweiten Gasstromes an dem Kompressor K2 ein Wärmeüberschuss gegenüber der Entspannungskälte in einem zweiten Prozess, zum Beispiel an der Turbine T3, anfällt. Über den gemeinsamen Wärmetauscher W1 kann in diesem Fall der erste Prozess durch die überschüssige Kompressionswärme des zweiten Prozesses unterstützt werden. Ebenfalls vorteilhaft kann die Anordnung eines E-Motors/Generators zwischen den beiden Turbinen T2, T3 und den beiden Kompressoren K1, K2 sein.

## Patentansprüche

1. Verfahren zur Gewinnung von Energie aus einem unter Druck stehenden Gas, bei dem
a) das Gas in einem Druckbehälter oder am Ende einer Druckleitung bereitgestellt wird,
b) das Gas zur Entspannung durch eine Turbine (Tₙ) gleitet wird und
c) die Turbine (Tₙ) eine gemeinsame Welle mit einem Kompressor (Kₙ) aufweist, und
d) die Entspannungsenergie des Gases die eine Turbine (Tₙ) und den Kompressor (Kₙ) antreibt,
**dadurch gekennzeichnet, dass**
e) das Gas ein brennbares Nutzgas, vorzugsweise Biogas oder Erdgas ist.

2. Verfahren nach Anspruch 1, wobei durch den Kompressor (Kₙ) ein anderer Strom des Nutzgases verdichtet oder gefördert wird.

3. Verfahren nach Anspruch 1, wobei das Nutzgas durch die Turbine (Tₙ) entspannt und ein anderer Strom eines der Art nach ändere Gases oder einer Flüssigkeit durch den Kompressor (Kₙ) verdichtet oder gefordert wird.

4. Verfahren nach einem der vorgehenden Ansprüche, wobei dem Nutzgas vor oder beim Eintritt in die Turbine (Tₙ) wenigstens soviel Wärmeenergie zugeführt wird, dass die Temperatur durch die Entspannung nicht unter den Taupunkt der Komponenten fällt und nicht zur äußeren Vereisung der Leitung führt

5. Verfahren nach dem vorgehenden Anspruch, wobei die Wärmeenergie wenigstens zum Teil bei der Verdichtung am Kompressor (Kₙ) gewonnen und über einen Wärmetauscher (Wₙ) an das Nutzgas abgegeben wird.

6. Verfahren nach einem der vorgehenden Ansprüche, wobei das Nutzgas nach dem Austritt aus der Turbine (Tₙ) einem Verbrennungsprozess zugeführt wird oder die Rotationsenergie der Welle genutzt wird, um einen Generator (Gₙ) zur Stromgewinnung anzutreiben.

7. Verfahren nach dem vorgehenden Anspruch, wobei der Strom genutzt wird um den Energiebedarf eines E-Motors (Mₙ), der den Kompressor (Kₙ) antreibt, wenigstens teilweise zu decken.

8. Verfahren nach einem der vorgehenden Ansprüche, wobei der Turbine (Tₙ) wenigstens eine weitere Turbine (Tₙ) nachgeschaltet ist und das Nutzgas von einem Auslass der einen Turbine (Tₙ) zum Einlass der weiteren Turbine (Tₙ) geführt wird.

9. Verfahren nach dem vorgehenden Anspruch, wobei dem einen Kompressor (Kₙ) wenigsten ein weiterer Kompressor (Kₙ) nachgeschaltet ist und die wenigstens eine weitere Turbine (Tₙ) mit dem wenigstens einen weitere Kompressor (Kₙ) über eine weitere gemeinsame Welle verbunden ist.

10. Verfahren nach dem vorgehenden Anspruch, wobei der andere Strom des Nutzgases vom Auslass des ersten Kompressors (Kₙ) zum Einlass eines weiteren Kompressors (Kₙ) geführt wird und einige/alle der weiteren Kompressoren (Kₙ) weitere, der Art nach andere Gas-/Flüssigkeitsströme verdichten/fördern oder einige/alle der weiteren Turbinen (Tₙ) weitere, der Art nach andere Gase als das Nutzgas entspannen.

11. Verfahren nach einem der drei vorgehenden Ansprüche, wobei auf der oder einer weiteren gemeinsamen Welle wenigstens eine weitere Turbine (Tₙ) oder wenigstens ein weiterer Kompressor (Kₙ) angeordnet ist.

12. Verfahren nach einem der vier vorgehenden Ansprüche, wobei die Turbinen (Tₙ) mit einem Generator (Gₙ), zu mehreren mit einem Generator (Gₙ) oder je einzeln mit je einem Generator (Gₙ) verbunden sind.

13. Verfahren nach einem der vorgehenden Ansprüche, wobei dem Nutzgas vor wenigstens einer der Turbinen (Tₙ) Wärmeenergie zugeführt wird, vorzugsweise über einen Wärmetauscher (Wₙ).

14. Verfahren nach einem der vorgehenden Ansprüche, wobei es sich bei dem Nutzgas um ein aufbereitetes Biogas handelt, wobei ein rohes Biogas auf dem Weg zu bzw, in einer Aufbereitungsanlage mittels des Kompressors (Kₙ) oder mehrer Kompressoren (Kₙ) verdichtet, und das aufbereitete Biogas nach Verlassen der Aufbereitungsanlage mittels der Turbine (Tₙ) oder mehrerer Turbinen (Tₙ) entspannt wird.

15. Verfahren nach einem der vorgehenden Ansprüche, wobei es sich bei dem Nutzgas um das Erdgas in einem Erdgasferntransportnetz mit 10 bar bis 100 bar Netzdruck handelt, das mittels der Turbine (Tₙ) oder mehrerer Turbinen (Tₙ) in ein lokales Erdgasverteilernetz mit niedrigerem Netzdruck entspannt wird.

16. Verfahren nach einem der vorgehenden Ansprüche, wobei es sich bei dem brennbaren Nutzgas um Erdgas oder Biogas oder ein Mischgas handelt, das z.B. zur Heizung oder Kühlung von Räumen, zum Kochen, zur Warmwasseraufbereitung, zum Betrieb von Verstromungsaggregaten mit Verbrennungsmotor oder Brennstoffzellen verwendet wird, wobei der Kompressor (Kₙ) oder die Kompressoren (Kₙ) eine Luftströmung in oder aus einem/n Raum, in oder aus ein/em Gebäude generiert.

17. Verfahren nach einem der vorgehenden Ansprüche, wobei das brennbare Nutzgas ein in einem Automobil zum Betreiben eines Antriebsmotors in einem Behälter mitgeführtes Gas ist und die Entspannungsenergie des Gases an der Turbine (Tₙ) über den Kompressor (Kₙ) zum Verdichten der für einen Verbrennungsprozess notwendigen sauerstoffhaltigen Luft genutzt wird.

18. Anlage zur Gewinnung von Energie aus einem unter Druck stehenden Gas, aufweisend
a) einen Druckbehälter oder einen Anschluss an ein Druckleitungssystem, aus dem das Gas mit einem hohen Druck ausströmt,
b) eine Turbine (Tₙ), die das ausströmende Gas entspannt und **dadurch** angetrieben wird,
c) einen Kompressor (Kₙ), der mit der Turbine (Tₙ) eine gemeinsame Welle hat und über diese Welle angetrieben wird,
d) eine nach der Turbine (Tₙ) angeordnete Vorrichtung zur Umwandlung der Energie des entspannten Gases,
**dadurch gekennzeichnet, dass**
e) ein Turbokompressor (Tₙ, Kₙ), wie z.B. aus Automobilen bekannt, Kompressor (Kₙ) und Turbine (Tₙ) bildet und
f) es sich bei dem unter Druck stehenden Gas um ein brennbares Nutzgas handelt,

19. Anlage nach dem vorhergehenden Anspruch, **dadurch gekennzeichnet, dass** der Druckbehälter oder das Druckleitungssystem Bestandteil einer Gasaufbereitungseinrichtung ist oder sind, in der aus einem Gärbehälter kommendes Biogas von Verunreinigungen befreit und auf Erdgasqualität gebracht wird.

20. Anlage nach einem der vorhergehenden Ansprüche, **dadurch gekennzeichnet, dass** dem Turbokompressor (Tₙ, Kₙ) wenigstens ein weiterer Turbokompressor (Tₙ, Kₙ) nachgeschaltet ist und die mehreren Turbokompressoren (Tₙ, Kₙ) nacheinander von dem sich dabei entspannenden Gas durchströmt werden.

21. Anlage nach einem der vorhergehenden Ansprüche, **dadurch gekennzeichnet, dass** vor dem Turbokompressor (Tₙ, Kₙ) oder den mehreren Turbokompressoren (Tₙ, Kₙ) ein Wärmetauscher (Wₙ) zur Erwärmung des oder der in die Turbine (Tₙ) oder die mehreren Turbinen (Tₙ) einströmenden Nutzgases oder Nutzgase angeordnet ist.

22. Anlage nach einem der vorhergehenden Ansprüche, **dadurch gekennzeichnet, dass** in Fließrichtung des Gases vor dem Turbokompressor (Tₙ, Kₙ) ein Wärmetauscher (Wₙ) angeordnet ist, der die Turbine (Tₙ) und den Kompressor (Kₙ) thermisch miteinander verbindet.

23. Anlage nach einem der vorhergehenden Ansprüche, **dadurch gekennzeichnet, dass** eine weitere Turbine (Tₙ) oder ein weiterer Kompressor (Kₙ) mit der Welle verbunden ist und die weitere Turbine (Tₙ) einen Gasstrom, der vom Nutzgasstrom vorzugsweise verschieden ist, entspannt oder der Kompressor (Kₙ) einen Gas-/Flüssigkeitsstrom komprimiert oder fördert.

24. Anlage nach einem der vorhergehenden Ansprüche, **dadurch gekennzeichnet, dass** die Turbine (Tₙ), mehrere Turbinen (Tₙ) oder alle Turbinen (Tₙ) mit einem Generator (Gₙ), mehreren Generatoren (Gₙ) oder je einem Generator (Gₙ), der/die zur Stromerzeugung genutzt wird/werden, über die Welle oder die jeweilige Welle verbunden ist oder sind.

25. Anlage nach einem der vorhergehenden Ansprüche, **dadurch gekennzeichnet dass** das entspannte Nutzgas bevorzugt eine Temperatur aus dem Bereich 0° bis 100°C aufweist.

26. Turbokompressor zur Verwendung in einer Anlage zur Gewinnung von Energie aus einem unter Druck stehenden brennbaren Nutzgas, nämlich aufbereitetes Biogas oder Erdgas,
**dadurch gekennzeichnet, dass**
a) das Nutzgas vor dem Einlass in eine Energieumwandlungsvorrichtung zur Entspannung durch eine Turbinenseite des Turbokompressors (Tₙ, Kₙ) geführt wird und
b) dabei eine Turbine (Tₙ) antreibt,
c) die Turbine (Tₙ) ihrerseits einen auf einer gemeinsamen Welle sitzenden Kompressor (Kₙ) des Turbokompressors (Tₙ, Kₙ) antreibt und
d) der Kompressor (Kₙ) ein ihn durchströmendes Gas verdichtet.
